# EUROPÄISCHE PATENTSCHRIFT

(11) **EP 3 415 341 B1**
(45) Veröffentlichungstag und Bekanntmachung des Hinweises auf die Patenterteilung: **23.12.2020**
(21) Anmeldenummer: 18174466.5
(22) Anmeldetag: 28.05.2018
(51) Int. Cl.: B60B 35/00, B60G 9/00, B60G 11/113, B60B 35/14, B60B 35/16, B60B 35/08

(54) **ACHSKÖRPER FÜR EIN NUTZFAHRZEUG UND HERSTELLUNGSVERFAHREN HIERFÜR**
AXIAL COMPONENT FOR A COMMERCIAL VEHICLE AND METHOD FOR PRODUCING THE SAME
CORPS D'ESSIEU POUR UN VÉHICULE UTILITAIRE ET PROCÉDÉ DE FABRICATION CORRESPONDANT

(30) Priorität: 12.06.2017 DE 102017112841
(43) Veröffentlichungstag der Anmeldung: 19.12.2018
(73) Patentinhaber: MAN Truck & Bus SE, 80995 München (DE)
(72) Erfinder: Gratzl, Roland, 80999 München (DE)
(74) Vertreter: v. Bezold & Partner Patentanwälte - PartG mbB

(56) Entgegenhaltungen:
- DE-A1-102006 017 421
- DE-U1- 20 119 640
- US-A1- 2002 163 174
- US-A1- 2004 256 825
- US-A1- 2008 001 379

## Beschreibung

Die Erfindung betrifft ein Verfahren zur Herstellung eines Achskörpers, insbesondere eines Nutzfahrzeugs. Achskörper eines Kraftfahrzeugs müssen mit einem Fahrwerk des Kraftfahrzeugs verbunden werden. Zur Fahrwerkanbindung können Konsolen beispielsweise über Kehlschweißnähte auf den Achskörper aufgeschweißt werden. Alternativ oder zusätzlich ist es möglich, Metallstreifen zur formschlüssigen Fahrwerkanbindung auf den Achskörper zu schweißen. Hierbei können beispielsweise durch ein Schmelzschweißverfahren erzeugte Heftpunkte die Metallstreifen und den Achskörper verbinden. Nachfolgend können die Metallstreifen abgefräst werden, um eine definierte Breite des Querschnitts für die formschlüssige Montage der Fahrwerkanbindung sicherzustellen.

Die bekannten Verfahren, die das Anschweißen von Konsolen und/oder Metallstreifen aufweisen, können nachteilig sein.

Sowohl die Kehlnähte der aufgeschweißten Konsolen als auch die mittels Heftschweißung angebrachten Metallstreifen reduzieren die Beanspruchbarkeit des Grundmaterials im tragenden Querschnitt. Diese Schwächung tritt insbesondere in der hochbeanspruchten Randzone der Außenkontur auf. Die Schwächung tritt auch bei einer theoretisch fehlerfreien Schweißung zum Beispiel durch Eigenspannungen aufgrund des Wärmeeintrags auf. Zusätzlich kann es zu Steifigkeitssprüngen im Randbereich von Konsolen, an Briden, Spannplatten und Fahrwerkanbindungen kommen. Dies kann zu hohen lokalen Beanspruchungen in dem Achskörper führen. Ein Niederspannen des Achsquerschnitts für die Montage der Fahrwerkanbindung mittels Briden, eine Klemmung mittels Spannplatten und Schrauben oder die direkte Verschraubung in aufgeschweißte Konsolen führt zu einer hohen Vorlast im Achsquerschnitt.

Besteht ein unzureichender Formschluss der Metallstreifen oder der Konsole in Fahrzeuglängsrichtung oder in vertikaler Richtung bei aufgeschweißten Konsolen hat dies eine erhöhte Beanspruchung der Heftpunkte oder Schweißnähte zur Folge.

Schweißnähte können ungünstige Formen und Übergänge aufweisen, deren Resultat eine ungewünschte Spannungsüberhöhung sein kann.

Zusätzlich können Binde- oder Wurzelfehler an Schmelzschweißungen fertigungsbedingt auftreten. Diese können sich insbesondere im hochbeanspruchten Bereich von Schweißnahtanfang und Schweißnahtende negativ auf die Beanspruchbarkeit des Achsquerschnitts auswirken.

Bei einer Auslegung mittels Finite-Elemente-Methode und Lebensdauerabschätzungen erschweren die oben genannten fertigungsbedingten Streuungen die Prognosefähigkeit. Im experimentellen Betriebsfestigkeitsnachweis wirken sich die oben genannten fertigungsbedingten Streuungen negativ auf die statistisch nachzuweisende Lebensdauer aus, da ein höherer Risikofaktor bei stark streunenden Ergebnissen berücksichtigt werden muss.

Die US 2008/0001379 A1 offenbart ein Montagesystem für ein Achsgehäuse. Mindestens ein Haltebauteil ist zwischen einem oberen und einem unteren Bereich eines Hohlarms des Achsgehäuses angeordnet.

In der DE 10 2006 017 421 A1 ist ein Montagesystem offenbart, das ähnlich zu dem in der US 2008/0001379 A1 offenbarten Montagesystem ausgebildet ist.

Die US 5,855,416 A offenbart eine runde Hülse im Inneren eines runden Achskörpers im Bereich eines Bremsflansches.

Die US 2,569,452 A offenbart einen Achskörper, bei dem ein rundes Achsrohr teilweise in einen Achskörper im Bereich eines Bremsflansches eingeschoben ist.

Die DE 201 19 640 U1 offenbart eine Radlagerung an einem als Achsrohr ausgebildeten Achskörper für Nutzfahrzeuge, bei welcher das Rad über Radbolzen an einer an dem Achsstummel des Achsrohres drehbar gelagerten Radnabe befestigt und der Achsstummel als gesondertes Bauteil mit einem Endabschnitt des Achsrohres verspannt ist.

Der Erfindung liegt die Aufgabe zu Grunde, einen verbesserten Achskörper und ein entsprechendes Herstellungsverfahren vorzusehen. Der verbesserte Achskörper soll insbesondere eine verbesserte Beanspruchbarkeit aufweisen.

Die Aufgabe wird durch ein Herstellungsverfahren gemäß dem unabhängigen Anspruch gelöst. Vorteilhafte Weiterbildungen sind in den abhängigen Ansprüchen angegeben.

Der Achskörper ist insbesondere als Achsbrücke für ein Kraftfahrzeug, vorzugsweise ein Nutzfahrzeug, ausgebildet. Der Achskörper weist eine erste Achskörperschale und eine zweite Achskörperschale, die mit der ersten Achskörperschale zum Ausbilden eines Rohrkörpers verbunden, insbesondere verschweißt, ist, auf. Der Rohrkörper weist eine Innenumfangsfläche mit einer Mehrzahl von flächigen Abschnitten, die einen unrunden Querschnitt des Rohrköpers bilden, auf. Der Achskörper weist zudem ein Verstärkungsbauteil, das einen unrunden Querschnitt aufweist, innerhalb des Rohrkörpers eingelegt ist und zumindest teilweise an den flächigen Abschnitten der Innenumfangsfläche des Rohrkörpers anliegt, auf.

Werden an den Achskörperschalen Fahrwerkanbindungen, zum Beispiel Konsolen, Streifen, Briden oder Spannplatten, angebracht, so reduziert das Verstärkungsbauteil den Steifigkeitssprung. Somit kann die lokale Beanspruchung der Achskörperschalen an den Verbindungskanten und insbesondere den Schweißnähten verringert werden. Die aus äußeren Lasten, zum Beispiel eingeleitet am Reifenlatsch, resultierenden Kräfte und Momente beanspruchen die tragenden Achskörperschalen an der hochbeanspruchten Fahrwerkanbindung. Da durch die Querschnittsverstärkung durch das Verstärkungsbauteil das Widerstandsmoment steigt, sinkt auch die Beanspruchung des Querschnitts.

Das Verstärkungsbauteil kann insbesondere formschlüssig in dem Rohrkörper angeordnet sein und/oder gehalten werden.

Das Verstärkungsbauteil kann insbesondere als ein materialeinheitlicher Festkörper ausgebildet sein.

Der Rohrkörper kann insbesondere ein geschlossenes Profil (Hohlprofil), insbesondere ein Rechteckprofil, aufweisen.

Der Achskörper kann insbesondere als ein Hohlarm einer Achsbrücke zur Fahrwerkanbindung ausgebildet sein.

In einer Weiterbildung ist das Verstärkungsbauteil zumindest teilweise beabstandet zu der Innenumfangsfläche, insbesondere zu Übergängen zwischen den flächigen Abschnitten, der Innenumfangsfläche des Rohrkörpers. Ein solcher definierter Abstand verbessert die Montierbarkeit, da aufgrund der Toleranzkette bei der Fertigung der Achskörperschalen und des Verstärkungsbauteils ohne aufwändige Nachbearbeitung kaum ein Formschluss möglich wäre.

In einer vorteilhaften Weiterbildung weist das Verstärkungsbauteil mehrere, insbesondere winkelig zueinander angeordnete, flächige Abschnitte auf. Die flächigen Abschnitte des Verstärkungsbauteils liegen an den flächigen Abschnitten der Innenumfangsfläche des Rohrkörpers an. Übergänge zwischen den flächigen Abschnitten des Verstärkungsbauteils sind beabstandet zu Übergängen zwischen den flächigen Abschnitten der Innenumfangsfläche des Rohrkörpers. Die flächigen Abschnitte können somit für einen Formschluss zwischen dem Verstärkungsbauteil und dem Rohrkörper sorgen, während die Übergänge die Fertigungstoleranzen ausgleichen.

In einer besonders vorteilhaften Weiterbildung sind die Übergänge als Radien ausgebildet. Die Radien der Übergänge zwischen den flächigen Abschnitten der Innenumfangsfläche des Rohrkörpers sind kleiner als die entsprechenden Radien der Übergänge zwischen den flächigen Abschnitten des Verstärkungsbauteils. Folglich können zwischen den Radien die Fertigungstoleranzen ausgeglichen werden.

In einer Ausführungsform ist das Verstärkungsbauteil einteilig ausgebildet. Alternativ weist das Verstärkungsbauteil mehrere Teile auf, die insbesondere lose aneinander anliegen oder miteinander verbunden, vorzugsweise verschweißt oder verklebt, sind.

In einer weiteren Ausführungsform weist das Verstärkungsbauteil ein offenes Profil, insbesondere ein U-Profil, ein L-Profil, ein I-Profil, ein F-Profil oder ein W-Profil, auf. Mit offenen Profilen können insbesondere nur einige der flächigen Abschnitte der Innenumfangsfläche des Rohrkörpers kontaktiert werden. Bei diesen flächigen Abschnitten handelt es sich insbesondere um diejenigen flächigen Abschnitte, die dicht an Schweißnähten des Rohrkörpers und/oder Bauteilen zur Fahrwerkanbindung des Achskörpers angeordnet sind.

Alternativ kann das Verstärkungsbauteil ein geschlossenes Profil (Hohlprofil), insbesondere ein Rechteckprofil, aufweisen. Dies kann den Vorteil haben, dass alle flächigen Abschnitte der Innenumfangsfläche des Rohrkörpers zumindest teilweise von dem Verstärkungsbauteil zur Abstützung kontaktiert werden können.

In einer weiteren Ausführungsform ist eine Schweißnaht, die die erste Achskörperschale und die zweite Achskörperschale verbindet, zusätzlich in Kontakt mit dem Verstärkungsbauteil zum Befestigen des Verstärkungsbauteils an dem Rohrkörper.

In einer bevorzugten Ausführungsform befestigt eines oder eine Mehrzahl von Befestigungsmitteln, insbesondere eine Schraube, ein Bolzen und/oder ein Klebstoff, das Verstärkungsbauteil am Rohrkörper. Der Bolzen kann beispielsweise mit Gewinde oder ohne Gewinde und/oder als Herzbolzen ausgebildet sein.

In einem Ausführungsbeispiel weist der Rohrkörper eine Öffnung auf, durch die sich das Befestigungsmittel erstreckt.

In einem weiteren Ausführungsbeispiel ist in einem Bereich um das Befestigungsmittel herum eine Dichtung zwischen dem Verstärkungsbauteil und dem Rohrkörper angeordnet, wobei die Dichtung insbesondere als eine Kleberaupe eines Klebstoffs ausgebildet ist. Die Dichtung kann einen Ölaustritt aus der Öffnung für das Befestigungsmittel verhindern. Ist die Dichtung als Kleberaupe ausgebildet, so kann die Dichtung zusätzlich das Verstärkungsbauteil am Rohrkörper befestigen.

In einer Ausführungsvariante weist das Verstärkungsbauteil im Bereich einer Aufnahme für das Befestigungsmittel eine vergrößerte Wandstärke auf. Damit kann eine Beanspruchung des Verstärkungsbauteils insbesondere an der Stelle der Befestigung verringert werden.

In einer bevorzugten Ausführungsvariante befestigt das Befestigungsmittel zusätzlich ein Fahrwerkbauteil an dem Achskörper. Damit kann eine direkte Anbindung zwischen einem Fahrwerkbauteil, dem Rohrkörper und dem Verstärkungsbauteil zur Verbesserung der Lastverteilung erfolgen.

In einer weiteren Ausführungsvariante ist das Verstärkungsbauteil bezüglich einer Längsachse des Rohrkörpers vollständig innerhalb des Rohrkörpers angeordnet.

Alternativ oder zusätzlich ist das Verstärkungsbauteil vollständig (bezüglich der Längsachse des Rohrkörpers und einer Radialrichtung bezüglich der Längsachse des Rohrkörpers) innerhalb des Rohrkörpers angeordnet ist. Damit dient das Verstärkungsbauteil vorzugsweise nur zum Abstützen des Rohrkörpers und kann dementsprechend funktionsoptimiert ausgelegt werden.

In einer weiteren Ausführungsform weist das Verstärkungsbauteil mindestens einen Vorsprung, der insbesondere als eine Konsole zur Fahrwerkanbindung ausgebildet ist, auf. Der Vorsprung erstreckt sich radial bezüglich einer Längsachse des Rohrkörpers nach außen durch eine Öffnung im Rohrkörper. Die Öffnung kann insbesondere von der ersten Achskörperschale, der zweiten Achskörperschale und/oder sowohl der ersten Achskörperschale als auch der zweiten Achskörperschale ausgebildet werden. Damit kann das Verstärkungsbauteil direkt zur Anbindung an das Fahrwerk verwendet werden.

In einem weiteren Ausführungsbeispiel weist der Achskörper einen Befestigungsbereich zur Fahrwerkanbindung auf. Das Verstärkungsbauteil ist zur Abstützung des Befestigungsbereichs und/oder zur Versteifung (Aussteifung) des Rohrkörpers ausgebildet (und angeordnet). Dies kann insbesondere vorteilhaft beim Niederspannen des Rohrköpers und des Befestigungsbereichs bspw. mittels Briden sein, da einer Verformung des Rohrkörpers entgegengewirkt wird. Alternativ oder zusätzlich steht das Verstärkungsbauteil über den Befestigungsbereich hinaus entlang einer Längsachse des Achskörpers (Rohrkörpers) und/oder einer Querachse des Achskörpers (Rohrkörpers) über. Vorzugsweise weist das Verstärkungsbauteil in einem oder beiden Endbereichen des Verstärkungsbauteils (insbesondere entlang der Längsachse und/oder der Querachse des Rohrkörpers) eine kontinuierlich abnehmende Wandstärke auf. Dies kann insbesondere Steifigkeitssprünge verhindern.

Die Längsachse des Rohrkörpers kann sich quer (senkrecht) zur Längsachse des Kraftfahrzeugs (Fahrzeuglängsrichtung) und insbesondere parallel zur Querachse des Kraftfahrzeugs (Fahrzeugquerrichtung) erstrecken.

Die Querachse des Rohrkörpers kann sich senkrecht zur Längsachse des Rohrkörpers erstrecken.

Der Befestigungsbereich kann beispielsweise als eine Konsole, als ein Metallstreifen zur formschlüssigen Fahrwerkanbindung und/oder als eine sonstige Fahrwerkanbindung ausgebildet sein.

Die Erfindung bezieht sich auf ein Verfahren zur Herstellung eines Achskörpers wie hierin offenbart. Das Verfahren weist das Einlegen des Verstärkungsbauteils in die erste Achskörperschale auf. Danach weist das Verfahren das Zusammenpressen und Fügen der ersten Achskörperschale und der zweiten Achskörperschale auf, wobei ein Formschluss zwischen dem Verstärkungsbauteil und der ersten Achsköperschale und/oder der zweiten Achskörperschale bewirkt wird.

Erfindungsgemäß st das Verstärkungsbauteil so ausgelegt, dass es sich während des Zusammenpressens im Wesentlichen nur an den Übergängen zwischen den flächigen Abschnitten des Verstärkungsbauteils unter Beibehaltung eines flächigen Kontakts zwischen den flächigen Abschnitten des Verstärkungsbauteils und den flächigen Abschnitten der Innenumfangsfläche des Rohrkörpers verformt.

In einer Weiterbildung weist das Verfahren ferner das Ausbilden, nsbesondere Bohren oder Fräsen, einer Aufnahme für das Befestigungsmittel in dem Verstärkungsbauteil nach dem Fügen der ersten Achskörperschale und der zweiten Achskörperschale auf, wobei vorzugsweise der Formschluss das Verstärkungsbauteil während des Vorsehens der Aufnahme hält.

Weitere Einzelheiten und Vorteile der Erfindung werden im Folgenden unter Bezug auf die beigefügten Zeichnungen beschrieben. Es zeigen:
- Figur 1: einen Achskörper eines Nutzfahrzeugs;
- Figur 2: einen Querschnitt durch einen Achskörper, der mehrere Ausführungsformen zeigt;
- Figur 3: einen Querschnitt durch einen Achskörper, der mehrere Ausführungsformen zeigt;
- Figur 4: einen Querschnitt durch einen Achskörper, der mehrere Ausführungsformen zeigt; und
- Figur 5: eine Draufsicht auf zwei Achskörperschalen vor dem Fügen der Achskörperschalen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

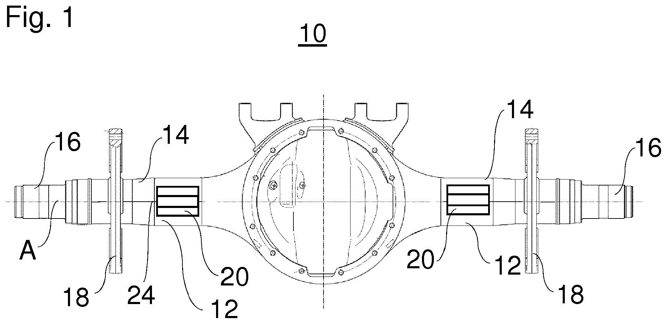

Die Figur 1 zeigt einen Achskörper 10. Der Achskörper 10 ist als eine Achsbrücke eines Nutzfahrzeugs ausgebildet. Das Nutzfahrzeug kann beispielsweise ein Lastkraftwagen oder ein Omnibus sein.

Jede Seite des Achskörpers 10 weist eine erste (untere) Achskörperschalen 12, eine zweite (obere) Achskörperschale 14 und einen Achsstummel 16 auf. Die erste und zweite Achskörperschale 12 und 14 sind insbesondere als Achskörperhalbschalen ausgebildet. Die erste Achskörperschale 12 und die zweite Achskörperschale 14 sind entlang einer Längsachse A des Achskörpers 10 miteinander verbunden, insbesondere verschweißt. Der Achsstummel 16 ist an ein Ende der miteinander verbundenen Achskörperschalen 12 und 14 gefügt, insbesondere geschweißt. Auf den Achskörper 10 kann ein Bremsflansch 18 einer Scheibenbremse oder Trommelbremse geschweißt sein. Durch den Achskörper 10 hindurch kann sich eine nicht dargestellte Steckwelle erstrecken.

Der Achskörper 10 wird bspw. über eine aufgeschweißte Konsole 20 mit einem Fahrwerk (nicht dargestellt) des Kraftfahrzeugs verbunden. Insofern dient die Konsole 20 als Befestigungsbereich zur Fahrwerkanbindung des Achskörpers 10. Alternative können andere Fahrwerkanbindungen verwendet werden. Zum Beispiel können Metallstreifen auf den Achskörper aufgeschweißt werden. Über die Metallstreifen kann eine formschlüssige Fahrwerkanbindung ermöglicht werden. Möglichkeiten zur Fahrwerkanbindung sind im Stand der Technik bekannt und daher hier nicht näher beschrieben. Die Fahrwerkanbindung kann beispielsweise mittels Briden oder einer Klemmung mit Spannplatten erfolgen. Es ist auch möglich, eine direkte Anbindung an ein Fahrwerkbauteil vorzusehen.

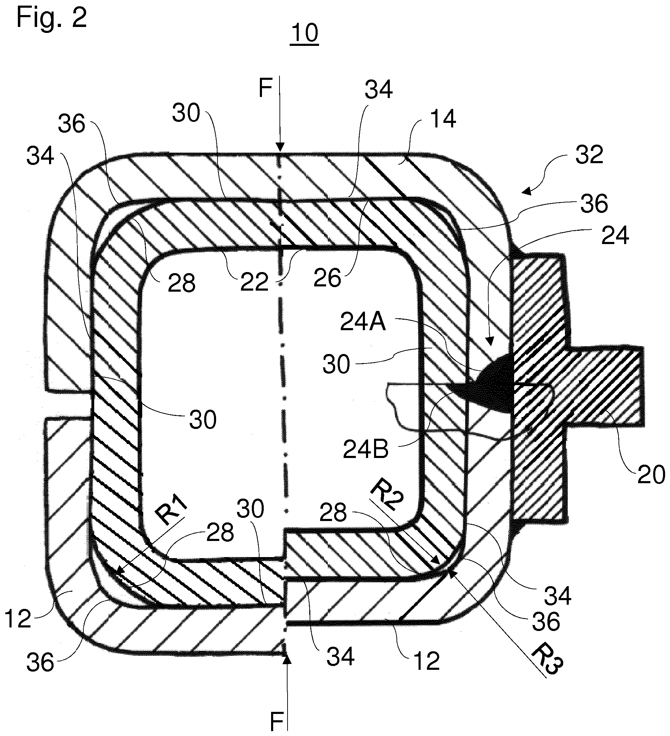

Die Figur 2 zeigt einen Querschnitt durch den Achskörper 10 in einer ersten Ausführungsform. Die Schnittebene liegt senkrecht zur Längsachse A im Bereich der Konsole 20. Der gezeigte Querschnitt zeigt auf der linken Seite einen Querschnitt vor dem Fügen der Achskörperschalen 12 und 14. Auf der rechten Seite ist ein Querschnitt nach dem Fügen der Achskörperschalen 12 und 14 und mit aufgeschweißter Konsole 20 dargestellt.

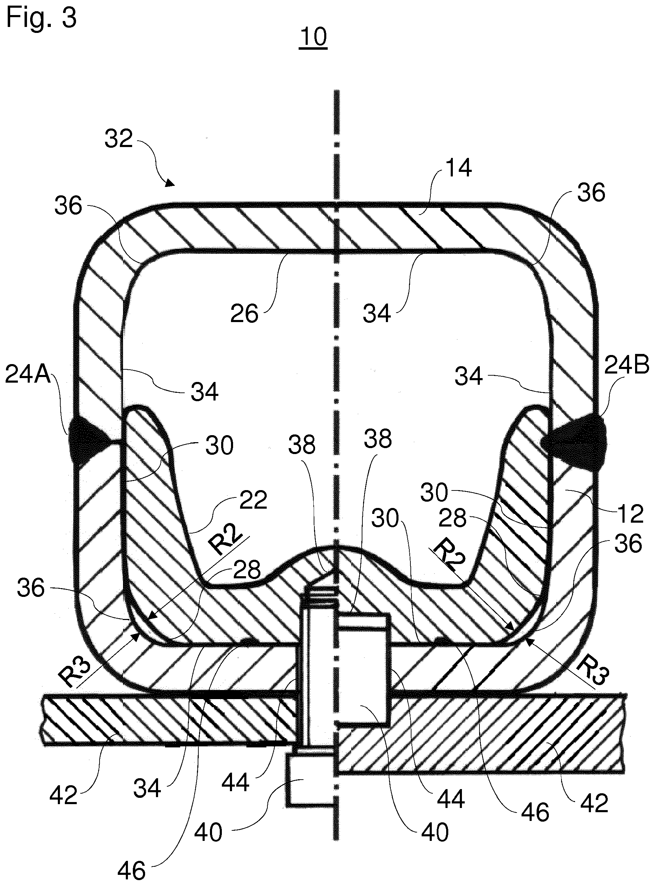

Vor dem Fügen (linke Seite in Figur 2) wird ein Verstärkungsbauteil 22 in die erste Achskörperschale 12 eingelegt. Das Verstärkungsbauteil 22 kann, wie dargestellt, einteilig ausgebildet sein. Es ist auch denkbar, dass das Verstärkungsbauteil 22 mehrteilig ausgebildet ist. Bei mehreren Teilen können die einzelnen Teile lose aneinander anliegenden oder miteinander verbunden, beispielsweise verklebt oder verschweißt, sein. In der dargestellten Ausführungsform weist das Verstärkungsbauteil 22 ein geschlossenes Hohlprofil in Form eines Rechtecks auf. Allerdings sind auch andere, insbesondere offene, Profilformen denkbar, wie später beispielhaft unter Bezugnahme auf die Figuren 3 bis 5 erläutert ist.

Das Verstärkungsbauteil 22 dient zum Verstärken des Achskörpers 10 im Bereich der Fahrwerkanbindung, also beispielsweise im Bereich der Konsole 20. Im Einzelnen kann der Achskörper 10 abgestützt werden, der durch Niederspannen eines Achsquerschnitts des Achskörpers für die Montage der Fahrwerkanbindung mittels Briden, eine Klemmung mittels Spannplatten und Schrauben oder die direkte Verschraubung in die aufgeschweißte Konsole 20 belastet ist.

Das Verstärkungsbauteil 22 weist eine Außenkontur auf, die in etwa einer Innenkontur der miteinander gefügten Achskörperschalen 12 und 14 entspricht.

Nach dem Einlegen des Verstärkungsbauteils 22 in die erste Achskörperschale 12 werden die erste Achskörperschale 12 und die zweite Achskörperschale 14 miteinander verbunden. Insbesondere können die Achskörperschalen 12 und 14 durch eine Schweißnaht 24 verbunden werden. Während des Fügeprozesses werden die Achskörperschalen 12 und 14 gegeneinander mit einer Kraft F gepresst. Die beiden Achskörperschalen 12, 14 bilden einen Rohrkörper 32.

Das Verstärkungsbauteil 22 ist so dimensioniert, dass durch das Zusammenpressen der Achskörperschalen 12, 14 möglichst alle Außenseiten des Verstärkungsbauteils 22 eine Innenumfangsfläche 26 des Achskörpers 10 berühren. Während des Zusammenpressens kann sich das Verstärkungsbauteil 22 verformen. Eine Umformung des Verstärkungsbauteils 22 findet im Wesentlichen im Bereich der Eckradien statt. Die Eckradien bilden Übergänge 28 zwischen geradlinigen (flächigen) Abschnitten 30 des Verstärkungsbauteils 22. Im Einzelnen verkleinern sich die Eckradien. Zum Beispiel wird der Eckradius R1 beim Zusammenpressen der Achskörperschalen 12 und 14 zu einem Eckradius R2. Die Eckradien R1 und R2 sind größer als ein Innenradius R3 der Innenumfangsfläche 26.

Nach dem Fügen der beiden Achskörperschalen 12 und 14 ist eine im Querschnitt formschlüssige Verbindung zwischen den beiden Achskörperschalen 12, 14 und dem Verstärkungsbauteil 22 entstanden. Im Einzelnen liegen die flächigen Abschnitte 30 des Verstärkungsbauteils 22 an flächigen Abschnitten 34 der Innenumfangsfläche 26 an. Im Bereich der Übergänge 28 ist das Verstärkungsbauteil 22 von entsprechenden Übergängen 36 der Innenumfangsfläche 26 beabstandet. Es wurde herausgefunden, dass aufgrund der Toleranzkette bei der Fertigung der Achskörperschalen 12, 14 und des Verstärkungsbauteils 22 und dem Fügeverfahren zwischen den Achskörperschalen 12, 14 ein Formschluss, bei dem die Eckradien beabstandet zueinander sind, zu bevorzugen ist.

Durch die winkelig angeordneten flächigen Abschnitte 34 der Innenumfangsfläche 26 weist der Rohrkörper 32 einen unrunden (nicht kreisrunden) Querschnitt auf. Durch die winkelig angeordneten flächigen Abschnitte 30 weist das Verstärkungsbauteil 22 ebenfalls einen unrunden (nicht kreisrunden) Querschnitt auf.

Die Schweißnaht 24 kann so vorgesehen sein, dass sie lediglich die Achskörperschalen 12 und 14 verbindet (siehe beispielhaft Schweißnahtabschnitt 24A in Figur 2). Die Schweißnaht 24 kann allerdings auch so vorgesehen sein, dass sie zusätzlich das Verstärkungsbauteil 22 an dem Rohrkörper 32 (den Achskörperschalen 12, 14) befestigt (siehe beispielhaft Schweißnahtabschnitt 24B in Figur 2).

Werden an dem Rohrkörper 32 beispielsweise eine Konsole 20 oder Metallstreifen an geschweißt, Briden, Spannplatten oder sonstige Fahrwerkanbindungen angebracht, so reduziert sich durch das Verstärkungsbauteil 22 der Steifigkeitssprung. Folglich reduziert sich die lokale Beanspruchung der Achskörperschalen 12, 14 an Auflagekanten und der Schweißnaht 24.

Das Verstärkungsbauteil 22 kann insbesondere entlang der Längsachse A des Achskörpers 10 über die Fahrwerkanbindung (den Befestigungsbereich der Fahrwerkanbindung) hinausragen. Vorzugsweise ist das Verstärkungsbauteil 22 dabei noch immer vollständig innerhalb des Rohrkörpers 32 bezüglich der Längsachse A angeordnet.

In einer vorteilhaften Weiterbildung weist das Verstärkungsbauteil 22 einen sich kontinuierlich (stetig) verjüngenden Auslauf (Endbereich) bezüglich der Längsachse A auf (nicht dargestellt). Mit anderen Worten gesagt, weist das Verstärkungsbauteil 22 einen oder zwei Endbereiche auf, an denen sich eine Wandstärke des Verstärkungsbauteils 22 kontinuierlich verringert. Dies kann weitere Steifigkeitssprünge verhindern.

In Figur 3 sind zwei weitere Ausführungsbeispiele mit direkter Anbindung des Rohrkörpers 32 an ein Fahrwerkbauteil 42 dargestellt. Das Verstärkungsbauteil 22 wurde erneut vor dem Fügen der Achskörperschalen 12, 14 in eine der Achskörperschalen 12 oder 14 eingelegt.

Auf der linken Seite des Querschnitts in Figur 3 ist eine Ausführungsform dargestellt, bei der die Schweißnaht 24A die erste und zweite Achskörperschale 12, 14 miteinander verbindet. Die Schweißnaht 24A verbindet das Verstärkungsbauteil 22 nicht mit den Achskörperschalen 12, 14. Das Verstärkungsbauteil 22 kann beispielsweise in der ersten Achskörperschale 12 eingeklebt sein. Die erste Achskörperschale 12 kann im montierten Zustand eine obere oder untere Achskörperschale sein.

Auf der rechten Seite des Querschnitts in Figur 3 ist ein Beispiel dargestellt, bei der die Schweißnaht 24B die erste und zweite Achskörperschale 12, 14 sowie das Verstärkungsbauteil 22 miteinander verbindet.

In der Figur 3 ist das Verstärkungsbauteil 22 als ein offenes Profil ausgebildet. Im Einzelnen weist das Verstärkungsbauteil ein W-Profil auf, mit einer erhöhten Wandstärke im mittleren Schenkel im Bereich einer Aufnahme 38 für ein Befestigungsmittel 40. In anderen Ausführungsformen kann das Verstärkungsbauteil je nach Anforderung ein anderes offenes Profil aufweisen, zum Beispiel ein I-Profil, ein L-Profil oder ein U-Profil.

Das Befestigungsmittel 40 kann beispielsweise als eine Schraube (linke Seite in Figur 3) oder ein Bolzen, zum Beispiel ein Herzbolzen (rechte Seite in Figur 3) ausgebildet sein. Das Befestigungsmittel 40 kann sich durch eine Öffnung 44, zum Beispiel eine Bohrung, in dem Rohrkörper 32 in die Aufnahme 38 erstrecken. Das Befestigungsmittel 40 kann das Verstärkungsbauteil 22 mit dem Rohrkörper 32 und/oder dem schematisch angedeuteten Fahrwerkbauteil 42 verbinden.

Die Öffnung 44 und die Aufnahme 38 können beispielsweise durch eine mechanische Bearbeitung des Rohrkörpers 32 und des Verstärkungsbauteils 22 eingebracht werden. Zum Beispiel können die Öffnung 44 und die Aufnahme 38 gebohrt sein. Die Aufnahme 38 und/oder die Öffnung 44 kann zusätzlich ein Gewinde für das Befestigungsmittel 40 aufweisen. Die mechanische Bearbeitung findet vorzugsweise in einem Zustand statt, in dem die Achskörperschalen 12, 14 bereits miteinander verbunden sind. Ein Formschluss zwischen dem Rohrkörper 32 und dem Verstärkungsbauteil 22 kann das Verstärkungsbauteil 22 während der mechanischen Bearbeitung in Position halten. Andererseits ist es beispielsweise auch möglich, dass das Verstärkungsbauteil 22 durch die Schweißnaht 24B und/oder durch eine Klebung gehalten wird.

Der Rohrkörper 32 ist im Betrieb mit einem Schmiermittel, zum Beispiel einem Schmieröl, gefüllt. Um Ölundichtigkeiten durch die Öffnung 44 zu verhindern, kann eine Dichtung 46 vorgesehen sein. Die Dichtung 46 umgibt die Aufnahme 38 und dichtet zwischen dem Verstärkungsbauteil 22 und dem Rohrkörper 32 ab. In einer bevorzugten Ausführungsform kann die Dichtung 46 als eine Kleberaupe ausgebildet sein, die das Verstärkungsbauteil 22 zusätzlich an dem Rohrkörper 32 befestigt.

Anwendungsbeispiel für eine derartige Ausführungsform sind beispielsweise eine Direktverschraubung einer Luftfeder auf dem Achskörper, eine Direktverschraubung einer Blattfeder, ein Formschluss mit einem Fahrwerkbauteil und eine Direktverschraubung mit einem Luftbalgträger.

Durch die direkte Anbindung des Fahrwerkbauteils 42 ist eine gewichtsoptimierte Konstruktion möglich. Zusätzlich können zusätzliche Bauteile und Montageschritte eingespart werden. Die direkte Anbindung ermöglicht zudem, auf Schweißnähte zum Aufschweißen von Konsolen oder Metallstreifen zu verzichten. Die direkte Anbindung macht zudem einen Formschluss über eine definierte Außenabmessung des Achsquerschnitts unnötig.

Eine direkte Anbindung eines Fahrwerkbauteils kann auch an mehreren Außenseiten des Rohrkörpers 32 erfolgen.

Bei einer Ausführungsform mit offenem Profil des Verstärkungsbauteils 22, wie in beispielsweise in Figur 3 dargestellt ist, kann sich das Verstärkungsbauteil 22 beim Zusammenpressen der Achskörperschalen 12, 14 verformen oder nicht verformen. Findet eine Verformung statt, so tritt diese wie bei der unter Bezugnahme auf Figur 2 beschriebenen Ausführungsform vorwiegend im Bereich der Übergänge 28 zwischen den flächigen Abschnitten 30 statt.

In der in Figur 3 dargestellten Ausführungsform mit offenem Profil des Verstärkungsbauteils 22 weist das Verstärkungsbauteil 22 zusätzlich sich kontinuierlich (stetig) verjüngende Ausläufe (Endbereiche) bezüglich einer Querachse des Rohrkörpers 32, die senkrecht zu der Längsachse A verläuft, auf.

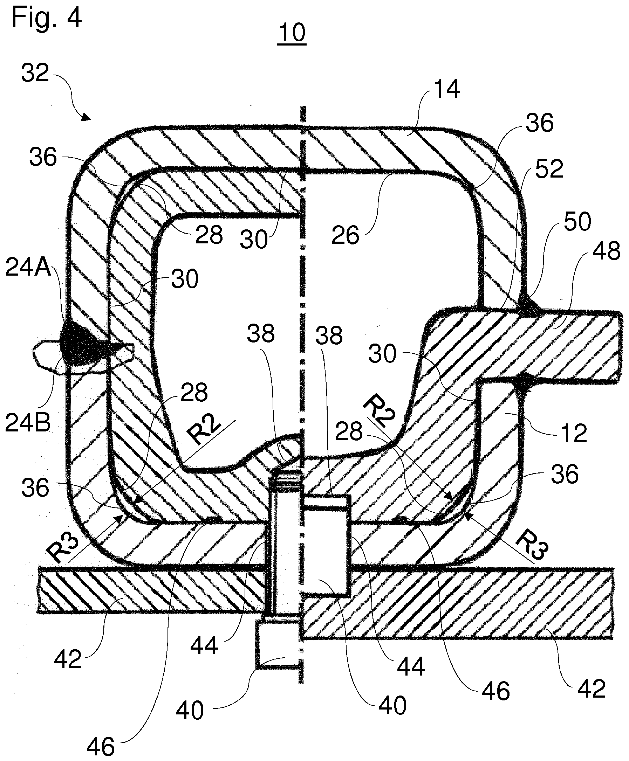

Die Figur 4 zeigt zwei weitere Ausführungsformen mit direkter Anbindung an ein Fahrwerkbauteil. Das Verstärkungsbauteil 22 wurde erneut vor dem Fügen der Achskörperschalen 12, 14 in eine der Achskörperschalen eingelegt.

Auf der linken Seite ist eine Ausführungsform dargestellt, bei der das Verstärkungsbauteil 22 wie bei der Ausführungsform der Figur 2 ein geschlossenes Profil aufweist. Zusätzlich weist die Ausführungsform auf der linken Seite in Figur 4 einen verstärkten Wandbereich zur Einbringung der Aufnahme 38 für das Befestigungsmittel 40 auf.

Auf der rechten Seite ist eine Ausführungsform dargestellt, bei der sich das Verstärkungsbauteil außerhalb des Rohrkörpers 32 erstreckt. Im Einzelnen weist das Verstärkungsbauteil 22 einen Vorsprung 48 auf. Der Vorsprung 48 erstreckt sich in einer Radialrichtung bezüglich der Längsachse des Achskörpers 10 (siehe Längsachse A in Figur 1). Der Vorsprung 48 kann mit einer Schweißnaht 50, zum Beispiel einer umlaufenden Schweißnaht, an einer Außenumfangsfläche des Rohrkörpers 32 befestigt sein. An dem Vorsprung 48 können wie bei der Konsole 20 der Ausführungsform von Figur 2 Fahrwerkbauteile angebracht werden.

Der Vorsprung 48 erstreckt sich durch eine Öffnung 52 im Rohrkörper 32.

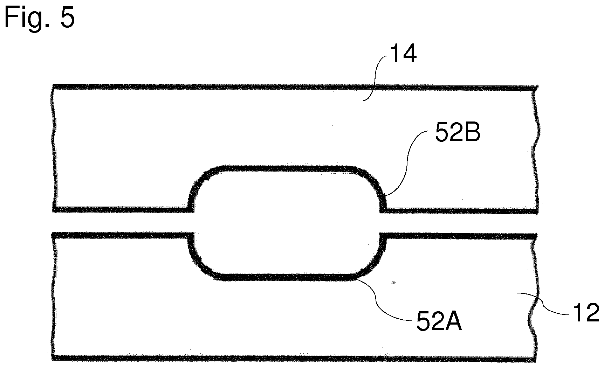

Die Figur 5 zeigt, wie die Öffnung 52 in den Achskörperschalen 12, 14 vorgesehen sein kann. Die Figur 5 zeigt die Achskörperschalen 12, 14 vor dem Fügen. In beide Achskörperschalen 12, 14 ist jeweils eine Ausnehmung 52A, 52B beispielsweise eingefräst. Die beiden Ausnehmungen (Taschen) 52A und 52B ergeben nach dem Fügen der Achskörperschalen 12, 14 die Öffnung 52. Es ist ebenso möglich, dass die Öffnung 52 nur durch eine der beiden Achskörperschalen 12, 14 ausgebildet ist.

Im montierten Zustand, der in Figur 4 dargestellt ist, wirkt eine aus einer Montagevorspannung und Betriebsbeanspruchung resultierende Lasteinleitung in den Vorsprung 48 nicht direkt auf die Achskörperschalen 12, 14. Der Lastpfad teilt sich auf die Wand des Rohrkörpers 32 im Bereich der Öffnung 52 und den formschlüssigen Kontakt zwischen dem Verstärkungsbauteil 22 und dem Rohrkörper 32 auf. Für die Achskörperschalen 12, 14 minimiert sich der Steifigkeitssprung an dem als Konsole dienenden Vorsprung 48. Dies gilt auch für die geringer belastete äußere Schweißnaht 50.

Wie Figur 4 dargestellt ist, kann auch die Ausführungsform mit dem Vorsprung 48 mit einer direkten Anbindung an das Fahrwerkbauteil 42 kombiniert werden.

Fachleute werden erkennen, dass einzelne Merkmale der hierin beschriebenen Ausführungsformen untereinander kombinierbar sind. Insofern sind sämtliche Merkmale der Ausführungsformen hierin als unabhängig voneinander offenbart, sodass eine Kombination von einzelnen Merkmalen und/oder ein Weglassen von einzelnen Merkmalen möglich ist, solange keine Widersprüche erwachsen. Zum Beispiel können alle Ausführungsformen ein Verbindungsbauteil mit kontinuierlich auslaufenden Endbereichen aufweisen und/oder zur direkten Anbindung an ein Fahrwerkbauteil verwendet werden.

### Bezugszeichenliste

- 10: Achskörper (Achsbrücke)
- 12: erste Achskörperschale
- 14: zweite Achskörperschale
- 16: Achsstummel
- 18: Bremsflansch
- 20: Konsole
- 22: Verstärkungsbauteil
- 24: Schweißnaht
- 24A: Schweißnaht zwischen erster und zweite Achskörperschale
- 24B: Schweißnaht zwischen erster, zweiter Achskörperschale und Verstärkungsbauteil
- 26: Innenumfangsfläche
- 28: Übergang
- 30: flächiger Abschnitt
- 32: Rohrkörper
- 34: flächiger Abschnitt
- 36: Übergang
- 38: Aufnahme
- 40: Befestigungsmittel
- 42: Fahrwerkbauteil
- 44: Öffnung
- 46: Dichtung
- 48: Vorsprung
- 50: Schweißnaht
- 52: Öffnung
- 52A: erste Ausnehmung
- 52B: zweite Ausnehmung

- A: Längsachse des Achskörpers
- R1: Radius am Übergang vor dem Fügen der Achskörperschalen
- R2: Radius am Übergang nach dem Fügen der Achskörperschalen
- R3: Radius am Übergang (nach den Flügen der Achskörperschalen)

## Patentansprüche

1. Verfahren zur Herstellung eines Achskörpers (10), insbesondere einer Achsbrücke, für ein Kraftfahrzeug, vorzugsweise ein Nutzfahrzeug, wobei der Achskörper (10) aufweist:
- eine erste Achskörperschale (12);
- eine zweite Achskörperschale (14), die mit der ersten Achskörperschale (12) zum Ausbilden eines Rohrkörpers (32) verbunden, insbesondere verschweißt, ist, wobei der Rohrkörper (32) eine Innenumfangsfläche (26) mit einer Mehrzahl von flächigen Abschnitten (34), die einen unrunden Querschnitt des Rohrköpers (32) bilden, aufweist; und
- ein Verstärkungsbauteil (22), das einen unrunden Querschnitt aufweist, innerhalb des Rohrkörpers (32) eingelegt ist und zumindest teilweise an den flächigen Abschnitten (34) der Innenumfangsfläche (26) des Rohrkörpers (32) anliegt,
wobei das Verfahren aufweist:
- Einlegen des Verstärkungsbauteils (22) in die erste Achskörperschale (12);
- Zusammenpressen und Fügen der ersten Achskörperschale (12) und der zweiten Achskörperschale (14), wobei ein Formschluss zwischen dem Verstärkungsbauteil (22) und der ersten Achsköperschale (12) und/oder der zweiten Achskörperschale (14) bewirkt wird,
**dadurch gekennzeichnet, dass:**
- sich das Verstärkungsbauteil (22) während des Zusammenpressens im Wesentlichen nur an den Übergängen (28) zwischen den flächigen Abschnitten (34) des Verstärkungsbauteils (22) unter Beibehaltung eines flächigen Kontakts zwischen den flächigen Abschnitten (30) des Verstärkungsbauteils (22) und den flächigen Abschnitten (34) der Innenumfangsfläche (26) des Rohrkörpers (32) verformt.

2. Verfahren nach Anspruch 1, ferner aufweisend:
Ausbilden, insbesondere Bohren oder Fräsen, einer Aufnahme (38) für ein Befestigungsmittel (40) in dem Verstärkungsbauteil (22) nach dem Fügen der ersten Achskörperschale (12) und der zweiten Achskörperschale (14) aufweist, wobei vorzugsweise der Formschluss das Verstärkungsbauteil (22) während des Vorsehens der Aufnahme (38) hält.

3. Verfahren nach Anspruch 1 oder Anspruch 2, wobei das Verstärkungsbauteil (22) zumindest teilweise beabstandet zu der Innenumfangsfläche (26), insbesondere zu Übergängen (36) zwischen den flächigen Abschnitten (34), der Innenumfangsfläche (26) des Rohrkörpers (32) ist.

4. Verfahren nach einem der vorherigen Ansprüche, wobei:
das Verstärkungsbauteil (22) mehrere, insbesondere winkelig zueinander angeordnete, flächige Abschnitte (30) aufweist;
die flächigen Abschnitte (30) des Verstärkungsbauteils (22) an den flächigen Abschnitten (34) der Innenumfangsfläche (26) des Rohrkörpers (32) anliegen; und
Übergänge (28) zwischen den flächigen Abschnitten (30) des Verstärkungsbauteils (22) beabstandet zu Übergängen (36) zwischen den flächigen Abschnitten (34) der Innenumfangsfläche (26) des Rohrkörpers (32) sind.

5. Verfahren nach Anspruch 3 oder Anspruch 4, wobei:
die Übergänge (28, 36) als Radien (R1, R2, R3) ausgebildet sind; und
die Radien (R3) der Übergänge (36) zwischen den flächigen Abschnitten (34) der Innenumfangsfläche (26) des Rohrkörpers (32) kleiner als die entsprechenden Radien (R1, R2) der Übergänge (28) zwischen den flächigen Abschnitten (30) des Verstärkungsbauteils (22) sind.

6. Verfahren nach einem der vorherigen Ansprüche, wobei:
das Verstärkungsbauteil (22) einteilig ausgebildet ist; oder
das Verstärkungsbauteil (22) mehrere Teile aufweist, die insbesondere lose aneinander anliegen oder miteinander verbunden, vorzugsweise verschweißt oder verklebt, sind.

7. Verfahren nach einem der vorherigen Ansprüche, wobei:
das Verstärkungsbauteil (22) ein offenes Profil, insbesondere ein U-Profil, ein L-Profil, ein I-Profil, ein F-Profil oder ein W-Profil, aufweist; oder
das Verstärkungsbauteil (22) ein geschlossenes Profil, insbesondere ein Rechteckprofil, aufweist.

8. Verfahren nach einem der vorherigen Ansprüche, wobei:
eine Schweißnaht (24B), die die erste Achskörperschale (12) und die zweite Achskörperschale (14) verbindet, zusätzlich in Kontakt mit dem Verstärkungsbauteil (22) zum Befestigen des Verstärkungsbauteils (22) ist; und/oder
eines oder eine Mehrzahl von Befestigungsmitteln (40), insbesondere eine Schraube, ein Bolzen und/oder ein Klebstoff, das Verstärkungsbauteil (22) am Rohrkörper (32) befestigt.

9. Verfahren nach Anspruch 8, wobei:
der Rohrkörper (32) eine Öffnung (44) aufweist, durch die sich das Befestigungsmittel (40) erstreckt; und/oder
in einem Bereich um das Befestigungsmittel (40) herum eine Dichtung (46) zwischen dem Verstärkungsbauteil (22) und dem Rohrkörper (32) angeordnet ist, wobei die Dichtung (46) insbesondere als eine Kleberaupe eines Klebstoffs ausgebildet ist.

10. Verfahren nach Anspruch 8 oder Anspruch 9, wobei:
das Verstärkungsbauteil (22) im Bereich einer Aufnahme (38) für das Befestigungsmittel (40) eine vergrößerte Wandstärke aufweist; und/oder
das Befestigungsmittel (40) zusätzlich ein Fahrwerkbauteil an dem Achskörper (10) befestigt.

11. Verfahren nach einem der vorherigen Ansprüche, wobei:
das Verstärkungsbauteil (22) bezüglich einer Längsachse (A) des Rohrkörpers (32) vollständig innerhalb des Rohrkörpers (32) angeordnet; und/oder
das Verstärkungsbauteil (22) vollständig innerhalb des Rohrkörpers (32) angeordnet ist.

12. Verfahren nach einem der vorherigen Ansprüche, wobei:
das Verstärkungsbauteil (22) mindestens einen Vorsprung (48), der insbesondere als eine Konsole zur Fahrwerkanbindung ausgebildet ist, aufweist;
der Vorsprung (48) sich radial bezüglich einer Längsachse (A) des Rohrkörpers (32) nach außen durch eine Öffnung (52) im Rohrkörper (32) erstreckt und die Öffnung (52) von der ersten Achskörperschale (12), der zweiten Achskörperschale (14) und/oder sowohl der ersten Achskörperschale (12) als auch der zweiten Achskörperschale (14) ausgebildet wird.

13. Verfahren nach einem der vorherigen Ansprüche, wobei der Achskörper (10) einen Befestigungsbereich (20) zur Fahrwerkanbindung aufweist, und wobei:
das Verstärkungsbauteil (22) zur Abstützung des Befestigungsbereichs (20) und/oder zur Versteifung des Rohrkörpers (32) ausgebildet ist; und/oder
das Verstärkungsbauteil (22) über den Befestigungsbereich (20) hinaus entlang einer Längsachse (A) und/oder Querachse des Achskörpers (10) übersteht und vorzugsweise in einem oder beiden Endbereichen des Verstärkungsbauteils (22) eine kontinuierlich abnehmende Wandstärke aufweist.

## Claims

1. A method for the production of an axle beam (10), in particular of an axle bridge, for a motor vehicle, preferably a utility vehicle, the axle beam (10) comprising:
- a first axle beam shell (12);
- a second axle beam shell (14) which is connected, in particular welded, to the first axle beam shell (12) in order to configure a tubular body (32), the tubular body (32) having an inner circumferential face (26) with a plurality of flat sections (34) which form a non-round cross section of the tubular body (32); and
- a reinforcement component (22) which has a non-round cross section, is inserted within the tubular body (32), and bears at least partially against the flat sections (34) of the inner circumferential face (26) of the tubular body (32),
the method comprising:
- inserting of the reinforcement component (22) into the first axle beam shell (12);
- pressing together and joining of the first axle beam shell (12) and the second axle beam shell (14), a positively locking connection being brought about between the reinforcement component (22) and the first axle beam shell (12) and/or the second axle beam shell (14),
**characterized in that**:
- during the pressing together, the reinforcement component (22) is deformed substantially only at the transitions (28) between the flat sections (34) of the reinforcement component (22) with retention of a flat contact between the flat sections (30) of the reinforcement component (22) and the flat sections (34) of the inner circumferential face (26) of the tubular body (32).

2. The method according to Claim 1, having, furthermore:
configuring, in particular drilling or milling, of a receptacle (38) for a fastening means (40) in the reinforcement component (22) after the joining of the first axle beam shell (12) and the second axle beam shell (14), the positively locking connection preferably holding the reinforcement component (22) during the providing of the receptacle (38).

3. The method according to Claim 1 or Claim 2, the reinforcement component (22) being spaced apart at least partially from the inner circumferential face (26), in particular from transitions (36) between the flat sections (34) of the inner circumferential face (26) of the tubular body (32).

4. The method according to one of the preceding claims:
the reinforcement component (22) having a plurality of flat sections (30) which are arranged, in particular, at an angle with respect to one another;
the flat sections (30) of the reinforcement component (22) bearing against the flat sections (34) of the inner circumferential face (26) of the tubular body (32); and
transitions (28) between the flat sections (30) of the reinforcement component (22) being spaced apart from transitions (36) between the flat sections (34) of the inner circumferential face (26) of the tubular body (32).

5. The method according to Claim 3 or Claim 4:
- the transitions (28, 36) being configured as radii (R1, R2, R3); and
the radii (R3) of the transitions (36) between the flat sections (34) of the inner circumferential face (26) of the tubular body (32) being smaller than the corresponding radii (R1, R2) of the transitions (28) between the flat sections (30) of the reinforcement component (22).

6. The method according to one of the preceding claims:
the reinforcement component (22) being of single-piece configuration; or
the reinforcement component (22) having a plurality of parts which, in particular, bear loosely against one another, or are connected, preferably welded or adhesively bonded, to one another.

7. The method according to one of the preceding claims:
- the reinforcement component (22) having an open profile, in particular a U-shaped profile, an L-shaped profile, an I-shaped profile, an F-shaped profile or a W-shaped profile; or
- the reinforcement component (22) having a closed profile, in particular a rectangular profile.

8. The method according to one of the preceding claims:
a welded seam (24B) which connects the first axle beam shell (12) and the second axle beam shell (14) additionally being in contact with the reinforcement component (22) in order to fasten the reinforcement component (22); and/or
one or a plurality of fastening means (40), in particular a screw, a bolt and/or an adhesive, fastening the reinforcement component (22) to the tubular body (32) .

9. The method according to Claim 8:
the tubular body (32) having an opening (44), through which the fastening means (40) extends; and/or
a seal (46) being arranged between the reinforcement component (22) and the tubular body (32) in a region around the fastening means (40), the seal (46) being configured, in particular, as an adhesive bead of an adhesive.

10. The method according to Claim 8 or Claim 9:
the reinforcement component (22) having an increased wall thickness in the region of a receptacle (38) for the fastening means (40); and/or
the fastening means (40) additionally fastening a chassis component to the axle beam (10).

11. The method according to one of the preceding claims:
the reinforcement component (22) being arranged completely within the tubular body (32) with regard to a longitudinal axis (A) of the tubular body (32); and/or
the reinforcement component (22) being arranged completely within the tubular body (32).

12. The method according to one of the preceding claims:
the reinforcement component (22) having at least one projection (48) which is configured, in particular, as a bracket for chassis attachment;
the projection (48) extending to the outside through an opening (52) in the tubular body (32) radially with regard to a longitudinal axis (A) of the tubular body (32), and the opening (52) being configured by the first axle beam shell (12), the second axle beam shell (14) and/or both the first axle beam shell (12) and the second axle beam shell (14).

13. The method according to one of the preceding claims, the axle beam (10) having a fastening region (20) for chassis attachment, and:
the reinforcement component (22) being configured to support the fastening region (20) and/or to reinforce the tubular body (32); and/or
the reinforcement component (22) projecting beyond the fastening region (20) along a longitudinal axis (A) and/or transverse axis of the axle beam (10), and preferably having a continuously decreasing wall thickness in one or the two end regions of the reinforcement component (22).

## Revendications

1. Procédé de fabrication d'un corps d'essieu (10), en particulier d'un pont d'essieu, pour un véhicule automobile, de préférence un véhicule utilitaire, le corps d'essieu (10) comprenant :
- une première coque de corps d'essieu (12) ;
- une deuxième coque de corps d'essieu (14) qui est reliée, en particulier soudée, à la première coque de corps d'essieu (12) pour la formation d'un corps tubulaire (32), le corps tubulaire (32) comprenant une surface périphérique intérieure (26) dotée d'une pluralité de parties planes (34) qui forment une section transversale non circulaire du corps tubulaire (32) ; et
- un composant de renforcement (22), qui présente une section transversale non circulaire, étant inséré à l'intérieur du corps tubulaire (32) et s'appuyant au moins partiellement contre les parties planes (34) de la surface périphérique intérieure (26) du corps tubulaire (32),
le procédé comprenant :
- l'insertion du composant de renforcement (22) dans la première coque de corps d'essieu (12) ;
- le pressage ensemble et l'assemblage de la première coque de corps d'essieu (12) et de la deuxième coque de corps d'essieu (14), une complémentarité de forme entre le composant de renforcement (22) et la première coque de corps d'essieu (12) et/ou la deuxième coque de corps d'essieu (14) étant produite,
**caractérisé en ce que** :
- le composant de renforcement (22), pendant le pressage ensemble, ne se déforme sensiblement qu'au niveau des transitions (28) entre les parties planes (34) du composant de renforcement (22) en maintenant un contact surfacique entre les parties planes (30) du composant de renforcement (22) et les parties planes (34) de la surface périphérique intérieure (26) du corps tubulaire (32).

2. Procédé selon la revendication 1, comprenant en outre :
la formation, en particulier le perçage ou le fraisage, d'un logement (38) pour un moyen de fixation (40) dans le composant de renforcement (22) après l'assemblage de la première coque de corps d'essieu (12) et de la deuxième coque de corps d'essieu (14), la complémentarité de forme retenant de préférence le composant de renforcement (22) pendant que le logement (38) est réalisé.

3. Procédé selon la revendication 1 ou la revendication 2, dans lequel le composant de renforcement (22) est au moins partiellement espacé de la surface périphérique intérieure (26), en particulier de transitions (36) entre les parties planes (34) de la surface périphérique intérieure (26) du corps tubulaire (32).

4. Procédé selon l'une des revendications précédentes, dans lequel :
le composant de renforcement (22) comprend plusieurs parties planes (30) disposées en particulier de manière angulaire les unes par rapport aux autres ;
les parties planes (30) du composant de renforcement (22) s'appuient contre les parties planes (34) de la surface périphérique intérieure (26) du corps tubulaire (32) ; et
des transitions (28) entre les parties planes (30) du composant de renforcement (22) sont espacées de transitions (36) entre les parties planes (34) de la surface périphérique intérieure (26) du corps tubulaire (32) .

5. Procédé selon la revendication 3 ou la revendication 4, dans lequel :
les transitions (28, 36) sont formées comme des rayons (R1, R2, R3) ; et
les rayons (R3) des transitions (36) entre les parties planes (34) de la surface périphérique intérieure (26) du corps tubulaire (32) sont plus petits que les rayons correspondants (R1, R2) des transitions (28) entre les parties planes (30) du composant de renforcement (22).

6. Procédé selon l'une des revendications précédentes, dans lequel :
le composant de renforcement (22) est réalisé d'un seul tenant ; ou
le composant de renforcement (22) comprend plusieurs parties qui s'appuient en particulier de manière lâche les unes contre les autres ou sont reliées les unes aux autres, de préférence sont soudées ou collées.

7. Procédé selon l'une des revendications précédentes, dans lequel :
le composant de renforcement (22) présente un profil ouvert, en particulier un profil en U, un profil en L, un profil en I, un profil en F ou un profil en W ; ou
le composant de renforcement (22) présente un profil fermé, en particulier un profil rectangulaire.

8. Procédé selon l'une des revendications précédentes, dans lequel :
un joint de soudure (24B) qui relie la première coque de corps d'essieu (12) et la deuxième coque de corps d'essieu (14) est en outre en contact avec le composant de renforcement (22) pour la fixation du composant de renforcement (22) ; et/ou
un moyen de fixation ou une pluralité de moyens de fixation (40), en particulier une vis, un boulon et/ou un adhésif, fixe(nt) le composant de renforcement (22) au corps tubulaire (32).

9. Procédé selon la revendication 8, dans lequel :
le corps tubulaire (32) comprend une ouverture (44) à travers laquelle le moyen de fixation (40) s'étend ; et/ou
un joint d'étanchéité (46) est disposé entre le composant de renforcement (22) et le corps tubulaire (32) dans une région autour du moyen de fixation (40), dans lequel le joint d'étanchéité (46) est réalisé en particulier sous la forme d'un cordon adhésif d'un adhésif.

10. Procédé selon la revendication 8 ou la revendication 9, dans lequel :
le composant de renforcement (22) présente une épaisseur de paroi accrue dans la région d'un logement (38) pour le moyen de fixation (40) ; et/ou
le moyen de fixation (40) fixe en outre un composant de châssis au corps d'essieu (10).

11. Procédé selon l'une des revendications précédentes, dans lequel :
le composant de renforcement (22) est disposé entièrement à l'intérieur du corps tubulaire (32) par rapport à un axe longitudinal (A) du corps tubulaire (32) ; et/ou le composant de renforcement (22) est disposé entièrement à l'intérieur du corps tubulaire (32).

12. Procédé selon l'une des revendications précédentes, dans lequel :
le composant de renforcement (22) comprend au moins une saillie (48) qui est formée en particulier comme une console pour la connexion au châssis ;
la saillie (48) s'étend vers l'extérieur à travers une ouverture (52) dans le corps tubulaire (32) radialement par rapport à un axe longitudinal (A) du corps tubulaire (32) et l'ouverture (52) est formée par la première coque de corps d'essieu (12), la deuxième coque de corps d'essieu (14) et/ou à la fois la première coque de corps d'essieu (12) et la deuxième coque de corps d'essieu (14).

13. Procédé selon l'une des revendications précédentes, dans lequel le corps d'essieu (10) comprend une région de fixation (20) pour la connexion au châssis, et dans lequel :
le composant de renforcement (22) est formé pour le support de la région de fixation (20) et/ou pour le raidissement du corps tubulaire (32) ; et/ou
le composant de renforcement (22) dépasse au-delà de la région de fixation (20) le long d'un axe longitudinal (A) et/ou d'un axe transversal du corps d'essieu (10) et présente, de préférence dans une région d'extrémité ou dans les deux régions d'extrémité du composant de renforcement (22), une épaisseur de paroi diminuant de manière continue.
